# EUROPEAN PATENT APPLICATION

(11) **EP 4 503 564 A1**
(43) Date of publication of application: **05.02.2025**
(21) Application number: 23806931.4
(22) Date of filing: 16.05.2023
(51) Int. Cl.: H04L 49/00

(54) **CONTROL METHOD AND APPARATUS FOR VIRTUAL ROBOT, AND DEVICE, STORAGE MEDIUM AND PROGRAM PRODUCT**

(30) Priority: 16.05.2022 CN 202210529988
(71) Applicant: BIGO TECHNOLOGY PTE. LTD., Singapore 117440 (SG)
(72) Inventor: LUO, Zengcheng, Guangzhou, Guangdong 511402 (CN)
(74) Representative: Yang, Shu
(86) International application number: PCT/CN2023/094536
(87) International publication number: WO 2023/221979

(57) **Abstract**

Provided in the present application are a control method and apparatus for a virtual robot, and a device, a storage medium and a program product. The control method for a virtual robot comprises: starting a plurality of virtual robots which are constructed by using a finite state automaton, wherein the virtual robots are used for cyclically simulating a user to operate an application program several times; in each cycle, determining a view where the virtual robots are located in the application program, and taking the view as a state; in each cycle, simulating the user to select services in the view, and taking the selected service as events; and in each cycle, driving the virtual robots to execute, in the view, user operations for triggering the service, and taking the user operations as actions.

## Description

The present disclosure claims priority to Chinese Patent Application No. 202210529988.5, filed on May 16, 2022, the content of which is incorporated herein by reference in its entirety.

### TECHNICAL FIELD

The present disclosure relates to the technical field of computer processing, in particular, relates to a method, apparatus, and device for controlling virtual robots, a storage medium, and a program product.

### BACKGROUND

Virtual robots are often used for emulating user behavior in business scenarios such as game battles and stress tests. For this reason, technical personnel are required to develop a set of virtual robot codes for a specific business scenario, maintain the virtual codes, and expand the behavior of the virtual robots.

For example, for a stress test of live-streaming, a room-dimensional virtual robot can be constructed, the virtual robot triggers tasks at regular intervals, and the virtual robot is cleared when the live-streaming stops.

Such virtual robots are applicable to a single business scenario, and the development and maintenance both involve the whole set of virtual robot codes and generate a large workload, resulting in relatively high costs.

### SUMMARY

The present disclosure provides a method, apparatus, and device for controlling virtual robots, a storage medium, and a program product to solve the problem of high cost of developing and maintaining the virtual robots.

According to some embodiments of the present disclosure, a method for controlling virtual robots is provided. The method includes:
starting a plurality of virtual robots constructed by using a finite state machine, wherein the virtual robots are configured to simulate, in a plurality of loops, a user to operate an application program, and the finite state machine includes a plurality of states, a plurality of events occurring at the plurality of states, and actions triggered by the plurality of events;
determining, in each loop, a view in which the virtual robots are located in the application program, and determining the view as the state;
simulating, in each loop, the user to select a service in the view, and determining the selected service as the event; and
driving, in each loop, the virtual robots to execute, in the view, a user operation configured to trigger the service, and determining the user operation as the action.

According to some embodiments of the present disclosure, an apparatus for controlling virtual robots is provided. The apparatus for controlling the virtual robots includes:
a virtual robot starting module, configured to start a plurality of virtual robots constructed by using a finite state machine, wherein the virtual robots are configured to simulate, in a plurality of loops, a user to operate an application program, and the finite state machine includes a plurality of states, a plurality of events occurring at the plurality of states, and actions triggered by the plurality of events;
a state determination module, configured to determine, in each loop, a view in which the virtual robots are located in the application program, and determine the view as the state;
an event selection module, configured to simulate, in each loop, the user to select a service in the view, and determine the selected service as the event; and
an action execution module, configured to drive, in each loop, the virtual robots to execute, in the view, a user operation configured to trigger the service, and determine the user operation as the action.

According to some embodiments of the present disclosure, a device for controlling virtual robots is provided. The device for controlling the virtual robots includes:
at least one processor; and
a memory in communication connection to the at least one processor, wherein
the memory stores one or more computer programs run by the at least one processor, and the one or more computer programs, when run by the at least one processor, cause the at least one processor to perform the method for controlling the virtual robots according to any one of the embodiments of the present disclosure.

According to some embodiments of the present disclosure, a computer-readable storage medium storing one or more computer programs is provided. The one or more computer programs, when run by a processor, cause the processor to perform the method for controlling the virtual robots according to any one of the embodiments of the present disclosure.

According to some embodiments of the present disclosure, a computer program product including one or more computer programs is provided. The one or more computer programs, when run by a processor, cause the processor to perform the method for controlling the virtual robots according to any one of the embodiments of the present disclosure.

### BRIEF DESCRIPTION OF THE DRAWINGS

FIG. 1 is a flowchart of a method for controlling virtual robots according to a first embodiment of the present disclosure;
FIG. 2 is a schematic diagram of running a virtual robot according to the first embodiment of the present disclosure;
FIG. 3 is an exemplary diagram of a view according to the first embodiment of the present disclosure;
FIG. 4 is an exemplary diagram of a user operation according to the first embodiment of the present disclosure;
FIG. 5 is a flowchart of a method for controlling virtual robots according to a second embodiment of the present disclosure;
FIG. 6 is a schematic structural diagram of an apparatus for controlling virtual robots according to a third embodiment of the present disclosure; and
FIG. 7 is a schematic structural diagram of a device for controlling virtual robots that performs a method for controlling virtual robots according to some embodiments of the present disclosure.

### DETAILED DESCRIPTION

The technical solutions in embodiments of the present disclosure are to be described hereinafter in conjunction with the accompanying drawings in the embodiments of the present disclosure, and the described embodiments are only a part, but not all of the embodiments of the present disclosure.

The terms "first", "second", and the like in the specification and claims of the present disclosure and the above accompanying drawings are defined to distinguish similar objects, and do not have to be defined to describe a specific order or sequence. The used data is interchangeable under appropriate circumstances such that the embodiments of the present disclosure described herein are capable of implementation in other sequences than those illustrated or described herein. Moreover, the terms "comprise", "include", and "provided with", and any variations thereof are intended to cover non-exclusive inclusion. For example, a process, method, system, product or device including a series of steps or units is not necessarily limited to the listed steps or units, but may include other steps or units that are not listed or are inherent in the process, method, product or device.

### First Embodiment

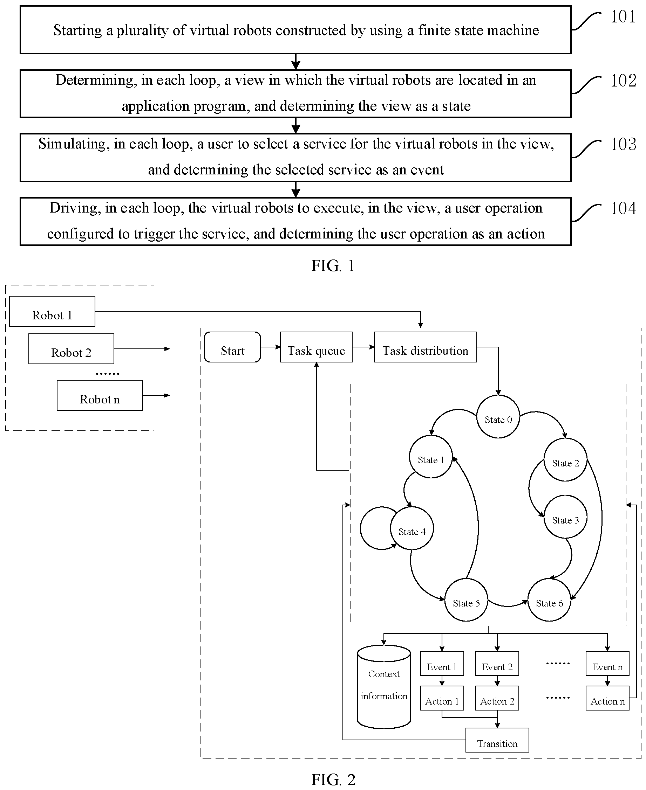

FIG. 1 is a flowchart of a method for controlling virtual robots according to the first embodiment of the present disclosure. The embodiment is applicable to a case that an emulated virtual robot is constructed based on a finite state machine. The method is applicable to an apparatus for controlling virtual robots. The apparatus for controlling the virtual robots is implemented in the form of hardware and/or software, and the apparatus for controlling the virtual robots is configured in a device for controlling virtual robots. As shown in FIG. 1, the method includes the following processes.

In 101, a plurality of virtual robots constructed by using a finite state machine are started.

In the embodiment, the finite state machine (FSM) is configured to construct virtual robots. These virtual robots are computer programs and are configured to simulate, in a plurality of loops, a user to operate an application program.

The finite state machine, also referred to as a state machine, is a mathematical model abstracted from operation rules of real objects.

In some cases, the finite state machine includes the following concepts:
1. A plurality of states, which refer to forms in which an object is expressed. The number of states of the object described is finite, and one state machine generally includes at least two states.
2. A plurality of events occurring in the states, which refer to a trigger condition or password for performing an operation.
3. Actions triggered by the events, which refer to operations executed upon the events occurring. One action generally corresponds to one function in programming.

The virtual robots simulating the user to operate the application program means that the virtual robots emulate the user and operate the application program based on the behavioral habit of the user.

The embodiment provides a framework for running the virtual robots. The framework is applicable to different business scenarios, for example, the virtual robots are configured to simulate different users to fight with a real user in an exercise mode of a game (application program), such that fighting contact of different levels (such as easy, medium, and hard) is achieved; the virtual robots are configured to simulate users to operate the application program at high frequency in a pressure test, so as to test possible bugs in the application program; and the virtual robots are configured to simulate audience users to watch live-streaming and interact with an anchor user in a live-streaming room (application program), so as to emulate a real watching environment, monitor various performances of a server and a client, and provide reference for function optimization.

In different business scenarios, application programs applicable to the business scenarios, for example, instant messenger, short video application, live-streaming application, news application, games, and the like, are added under the framework.

In different business scenarios, user information applicable to the business scenarios, such as a user identifier (ID), a nickname of the user, a profile picture of the user, a grade of the user, and a region in which the user is located, is added under the framework to emulate the user.

The user information is configured randomly, with constraint conditions (for example, the age of the user is not allowed to be lower than a value), or in other manners in the case that virtual robots are started, or the user information is replaced randomly, with constraint conditions, or in other manners during running in the case that the virtual robots satisfy some conditions (for example, the virtual robots enter a live-streaming room), or the like, that is, each of the virtual robots simulates either the operation of one user or the operations of a plurality of users, which is not limited in the embodiment.

Different application programs are provided with different functions, and accordingly, the operations of the users simulated by the virtual robots are also different. These operations are generally related to the requirements of the business scenarios, and are not necessarily all, but part of operations that the application programs support. For example, for a live-streaming application, the requirements of the live-streaming application are to provide reference for optimizing functions of a live-streaming room, such that the operations of the users simulated by the virtual robots include entering a homepage, entering the live-streaming room, posting pop-up information in the live-streaming room, liking in the live-streaming room, and presenting a virtual item to an anchor user in the live-streaming room, and the operations of the users not simulated by the virtual robots include sharing the live-streaming room, searching keywords, and the like.

As shown in FIG. 2, in a business scenario, a plurality of virtual robots that are independent of each other, such as virtual robot 1, virtual robot 2, ..., and virtual robot n, are deployed to form a virtual robot cluster. Being independent of each other refers to virtual robots being implemented by using independent virtual machines, independent threads, or the like. There is no correlation between the virtual robots, and the virtual robots are run and simulated independently of each other and do not affect each other.

Exemplarily, hashed sharding of the virtual robots is performed in an instance of each of the virtual robots, that is, the instance of each of the virtual robots processes actions of some of the virtual robots, such that the capacity expansibility of the virtual robots is improved.

The running strategies (such as the running time of each of the virtual robots and the number of virtual robots running in a period of time) of the virtual robots are configured in advance for the business scenario, such that corresponding virtual robots are started based on the running strategies. For example, more virtual robots are used to simulate a larger number of users to enter a live-streaming room in the evening time, and less virtual robots are used to simulate a smaller number of users to enter a live-streaming room in the early morning.

In addition, in cases such as disaster tolerance and fault restart, the virtual robots are restarted to resume the original business scenario.

For each of the virtual robots, a task queue configured to store tasks is set. Strategies (such as distribution time period) for distributing the tasks are set based on the business requirements of business scenarios, the tasks are distributed to the virtual robots based on the strategies, and the virtual robots execute the tasks and simulate the user to operate the application program. The operation of the user simulated by the virtual robots once traverses the finite state machines once, and this process is referred to as a tick loop. From the user's perspective, a real user generally performs various operations on the application program, and from the application program's perspective, at the same moment, the operations of a plurality of users are present in a space (such as a live-streaming room and a scenario in a game) commonly accessed between the users. Therefore, in order to emulate these scenarios, the virtual robots simulate, in a plurality of tick loops, the same user or different users to operate the application program.

In 102, a view in which the virtual robots are located in an application program is determined in each loop, and the view is determined as a state.

As shown in FIG. 2, the finite state machine provides a plurality of states, such as state 0 to state 6. A view in which the virtual robots are currently located in the application program is identified in each tick loop, and the view is a state in the finite state machine according to the mechanism of the finite state machine.

The virtual robots do not necessarily load a user interface (UI) of the application program, but set a flag bit for each view in advance, and use the flag bit to represent the view in which the virtual robots are currently located in the application program, thereby avoiding the operation of loading the UI and reducing the power consumption of the virtual robots.

The view is the base class of the space in an operating system such as Android. The common base class of the views is view, whether they are simple text view and button or complex linear layout and list view.

The view is an abstraction of a control of an interface layer, which represents a control. The view is also available in the form of a control group (view group), i.e., a group of views, and the view group also inherits the view, which means that the view is a single control or a group of controls consisting of a plurality of controls.

For business scenarios such as a stress test, in consideration of business requirements of the business scenarios, a UI of an application program is loaded, so as to query a view in which a focus is located in the current UI, which is not limited in the embodiment.

The views provided by different application programs are different. In the process that the virtual robots simulate the user to operate the application program, all the views of the application program are set to be the states in the finite state machine based on the business requirements, or some of the views of the application program are set to be the states in the finite state machine, and some of the views of the application programs are ignored.

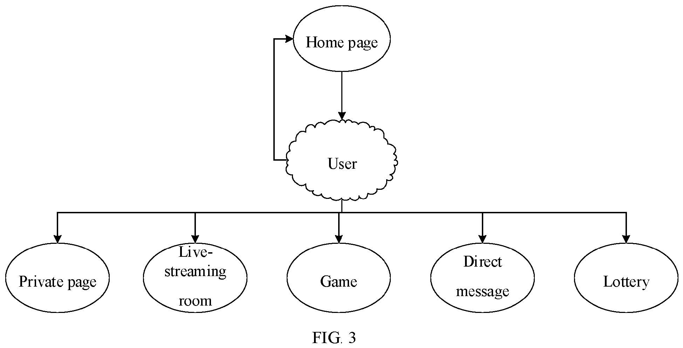

Taking a live-streaming application as an example, as shown in FIG. 3, in the live-streaming application, the views such as a home page, a private page, a live-streaming room game, a direct message, and a lottery are provided. In the case that the virtual robots are in the home page, the user is simulated to select the private page, the live-streaming room game, the direct message, or the lottery, or to stay in the home page.

In the embodiments, the view is the state in the finite state machine, such that the coverage rate of the operations executed by the user in the application program is improved, and the comprehensiveness of the emulation of the virtual robots is improved.

A database is configured in advance for the virtual robots. The database is configured to store, for each of the virtual robots (represented by identifiers such as ID), the state of the virtual robot in the finite state machine in chronological order based on the loop, i.e., the database stores the view in which the virtual robot is located in the application program for each of the virtual robots.

Exemplarily, the state of the virtual robots identified as 123456789 is saved in a hash data structure such as robot_123456789_status.

In a first loop upon starting the virtual robot, a state in the finite state machine stored for the virtual robots in the last loop is read from a preset database based on identifiers such as ID.

In the case that the state is read successfully, that is, the virtual robots have previously had a specific state, the state is configured for the virtual robots to resume the view in the application program, such that each of the virtual robots can resume its own state.

In the case that the reading is unsuccessful, that is, the virtual robots do not have a specific state previously, it is determined that the virtual robots are located in a default view in the application program, such as a home page of the application program, and the default view is determined as the state in the finite state machine.

In some business scenarios, in the case that cases such as disaster tolerance and fault restart occur, the virtual robots are restarted. These virtual robots have been continuously simulating user operations (namely user-executable operations) in the original business scenario and are distributed in different views. The states of the virtual robots are interrupted in cases such as disaster tolerance and fault restart, and resuming the states of the virtual robots upon restarting can prevent the virtual robots from being concentrated in some default views, such that the business scenarios are more natural and more realistic.

In non-first starting, the virtual robots read the state in which they are in the last tick loop from an area such as memory.

In 103, a user is simulated, in each loop, to select a service for the virtual robots in the view, and the selected service is determined as an event.

Different views provide different services in different application programs. For example, in a view of a live-streaming room, a service of watching live-streaming, a service of posting pop-up information, a service of presenting a virtual item to an anchor user, and a service of liking.

As shown in FIG. 2, in each tick loop, the behavioral habit of the user is simulated to select one of the services for the virtual robot in a current view, and the user triggers a user operation to get the service. The service is an event (such as event 1-event n) occurring in a state in the finite state machine according to the mechanism of the finite state machine.

In the embodiments of the present disclosure, the process 103 includes the following processes.

In 1031, a first file configured for the view is loaded in each loop.

In 1032, the services provided by the view and a screening rule are read in the first file.

The embodiment provides a framework for running the virtual robots, and for different business scenarios, technical personnel configure, based on a specification of the framework, a first file in advance for a plurality of views in an application program. The format of the first file includes extensible markup language (XML), dynamic link library (DLL), and the like, and the first file is implemented as a configuration file, a plug-in, a script, or the like. The services provided by each of the views and a screening rule, i.e., a specification used for screening each of the services and conforming to the behavioral habit of the user, are recorded in the first file.

In each tick loop, the first file configured for a current view is loaded to a memory for running, such that a plurality of services provided by the current view and the corresponding screening rule are read in the first file.

In 1033, a user is simulated to select one of the services based on the screening rule, and the selected service is determined as an event occurring in the state in the finite state machine.

The screening rule is parsed, and the specification recorded in the screening rule is executed, such that the user is simulated to select one of the services from all the services, which is determined as an event occurring in the state in the finite state machine.

In some embodiments, a mapping relationship between each of the services and a probability is recorded in the screening rule, and the mapping relationship represents a probability of selecting each of the services based on the behavioral habit of the user.

In the embodiment, the probability of selecting each of the services for the user is read from the screening rule.

One of the services is selected for the virtual robots, which is determined as an event occurring in the state in the finite state machine based on the probability.

The service includes idle. The idle refers to a case that a user is watching and/or listening to information (such as live-streaming screens, news, and novels) in a view, the user is not in front of the view, or the like, and does not perform a valid user operation on the view.

In the embodiment, the probability of the idle is greater than the probability of any service other than the idle, that is, the idle service has high probability to be selected to simulate the implementation of a case that the user does not frequently execute a valid user operation in the view in the application program.

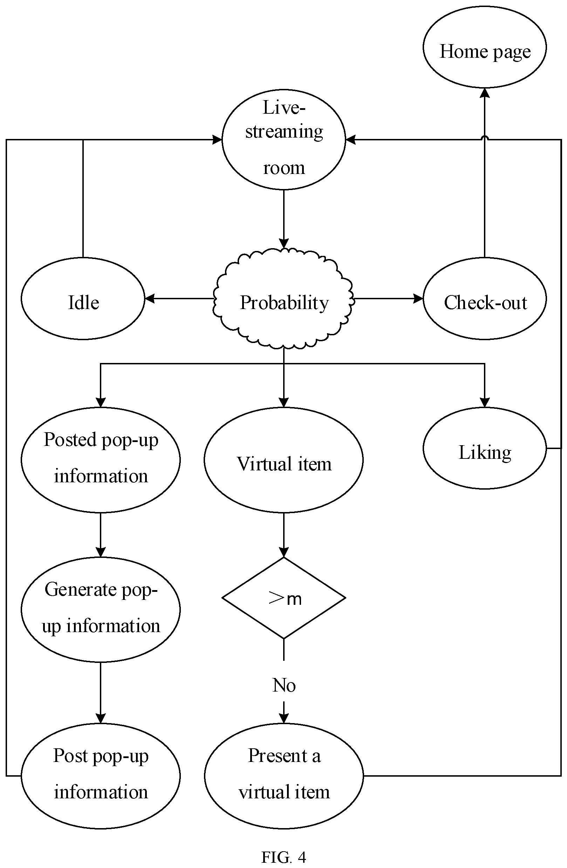

Taking a live-streaming application as an example, as shown in FIG. 4, in the case that the virtual robot is in a live-streaming room (state), the provided services include idle, check-out, posting pop-up information, presenting a virtual item, and liking, and the probability of the user selecting idle (e.g., 90%) is greater than the probability of the user selecting check-out (e.g., 4%), the probability of posting pop-up information (e.g., 5%), the probability of presenting a virtual item (e.g., 0.4%), or the probability of liking (e.g., 0.6%).

In other embodiments of the present disclosure, the process 103 includes the following processes.

In 1034, an error is detected in the view.

In 1035, a user is simulated, in response to the error, to select idle in the view, and the idle is determined as an event occurring in the state in the finite state machine.

In the embodiment, the services provided by the view include the idle.

An error may occur in the state (i.e., view) of the virtual robots in cases such as the data inconsistencies that prevent the current state from executing an action. For example, the virtual robots are unable to execute a loop according to the logic of live-streaming upon an anchor user stopping the live-streaming in the live-streaming room. In this case, the previously set screening rule is ignored, and idle is forced to be selected as an event occurring in the state in the finite state machine, and wait to be retriggered in the next tick loop. Incorrect user operations are avoided by the idle, such that the authenticity of simulating the user to operate is ensured.

In 104, the virtual robots are driven, in each loop, to execute, in the view, a user operation configured to trigger the service, and the user operation is determined as an action.

As shown in FIG. 2, the virtual robot is driven, in each tick loop, to execute, in the view, a user operation configured to trigger a service, and the user operation is an action (such as action 1-action n) triggered by an event in the finite state machine according to the mechanism of the finite state machine. In this case, the virtual robots return to the task queue, and wait for the next task or the next tick loop.

In the embodiments of the present disclosure, the process 104 includes the following processes.

In 1041, a second file configured for the view is loaded in each loop.

In 1042, a simulation rule configured for the service is read in the second file.

The embodiment provides a framework for running the virtual robots, and for different business scenarios, technical personnel configure, based on a specification of the framework, a second file in advance for a plurality of views in an application program. The format of the second file includes XML, DLL, and the like, and the second file is implemented as a configuration file, a plug-in, a script, or the like. The simulation rule for a plurality of services, i.e., a specification configured to trigger a user operation to implement a plurality of services, is recorded in the second file.

The first file and the second file are the same file or different files, which is not limited in the embodiment.

In each tick loop, a second file configured for a current view is loaded into a memory for running, such that the simulation rule for the selected service configuration is read in the second file.

In 1043, the virtual robots are driven to execute a user operation in the view based on the simulation rule, and the user operation is determined as an action triggered by the event in the finite state machine.

The simulation rule is parsed, and the specification recorded by the simulation rule is executed, such that the virtual robots are driven to execute a corresponding user operation in the view based on the simulation rule, which is determined as an action triggered by the event in the finite state machine.

In the embodiments, for a user operation executed locally by an application program, the user operation is executed directly locally in the application program.

For a user operation interacting with a server, the application program provides a plurality of interface specifications of an application programming interface (API) for implementing the user operation. Generally, in the case that a user executes the user operation on a UI of the application program, the application program encapsulates a corresponding user request according to an element triggered on the UI, and sends the user request to the server. However, in the embodiment, the interface specifications are recorded in the simulation rule, and the interface specifications for executing the user operation are read in the simulation rule.

The virtual robots do not necessarily load the UI of the application program, but directly generates, based on the interface specifications, a user request for representing executing the user operation in the view, and the virtual robots are driven to send the user request to the server, which is determined as an action triggered by the event in the finite state machine.

For example, as shown in FIG. 4, in the case that the selected service is check-out or liking, the corresponding user request is encapsulated based on the interface specifications, such that the server is requested to check out of the live-streaming room or like the live-streaming room.

The embodiment directly encapsulates the user request to implement the user operation and avoids the operation of loading the UI, thereby reducing the power consumption of the virtual robots.

For business scenarios such as a stress test, in consideration of business requirements of the business scenarios, the UI of the application program is loaded to simulate user operations such as click and long press in a current UI, which is not limited in the embodiments.

In a manner of executing the user operation, context information recorded by the virtual robots in the process of simulating the user to operate the application program is collected, the context information is configured to assist triggering the user operation, and the context information is written into the database.

Because the read and write of the context are frequent and are multi-read and multi-write, the database is selected as a memory key/value (KV) database, such as Redis and MemCache.

For different business scenarios, the executable user operations in the application program are different, and the stored context information is also different, which is not limited in the embodiments.

Taking live-streaming as an example, the stored context information is as follows:

| key | value |
|---|---|
| identifiers of virtual robots | 123123 |
| number of utterances today | 34 |
| number of gifts presented today | 2 |
| recent utterance | ["aaa","bbb","ccc"] |
| utterance decision network | neural network parameter |
| package content | ["111","222","333"] |

In the manner, as shown in FIG. 2, the context information recorded by the virtual robots in the process of simulating the user to operate the application program is acquired from the preset database.

First environmental information on which the current service has dependency is read from all the context information based on the simulation rule. The dependency refers to a relationship of use existing between the user operation for implementing the service and the first environmental information. The first environmental information has influence on the user operation for implementing the service, and conversely, the first environmental information is required to assist triggering the user operation to implement the service.

A component (such as an utterance decision network of a third party, represented by an identifier such as ID or path) on which the service has dependency is determined based on the simulation rule, the first environmental information is input into the component to call the component to generate target information applicable to the first environmental information, such as text information and expressions, and the virtual robots are driven to post the target information in the view, which is determined as the action triggered by the event in the finite state machine.

In some business scenarios, users post information in the application program, for example, as shown in FIG. 4, posting pop-up information in a live-streaming room and posting comments on news. Most of the users post information for a specific business object (such as a live-streaming program and news), and the information reflects the views of the users on the business object and is not meaningless information. Therefore, the component directly analyzes semantics of the business object (context information) through a computer vision technology, such that target information used for expressing the semantics through natural language processing (NLP) is generated. In addition, it is difficult to quickly analyze semantics of a business object in a format such as video data, and information posted by the other users for the business object (i.e., context information, such as pop-up information posted by the other users in a live-streaming room) reflects the views of the other users on the business object, thus the component analyzes, through NLP, the semantics of information posted by the other users for the business object, such than the target information (e.g., pop-up information) that is the same as or similar to the semantics is generated, and then the target information (e.g., pop-up information) is posted.

In another manner of executing the user operation, as shown in FIG. 2, the context information recorded by the virtual robots in a process of simulating the user to operate the application program is acquired from the preset database, and second environmental information which limits the service is read from the context information based on the simulation rule.

In one aspect, the limits refer to cases that a real user, due to the actual execution of user actions in the application is subject to the natural person's ability, interest and other physiological limits, is unlikely to perform user actions frequently or aimlessly. In the case that these limits are exceeded, the authenticity of the user is reduced, for example, users mostly posting pop-up information intermittently in the live-streaming room and being less likely to continuously post pop-up information, and users in the young stage being less likely to continuously watch animation in the infant stage and post comments on the animation in the infant stage.

In another aspect, the limits refer to a case that the user operation provided by the application program is limited by the service of the server, and the user operation has a high probability to not break through the business limits. For example, in the case that the live-streaming room is blocked, any audience user is unable to post information, and for another example, as shown in FIG. 4, in the case that the number of a kind of virtual item is defined as m in the live-streaming room, the number of the virtual item presented by the audience users is unable to be greater than the defined number m, and in the case that the number is not greater than the number m, the audience user is able to present the virtual item to the anchor user.

The conditions limiting the service are determined based on the simulation rule. These conditions are physiological limits from the user or business limits from the server, for example, the number of virtual items presented in the live-streaming room, the time interval for posting the pop-up information in the live-streaming room, and the number of the pop-up information posted in the live-streaming room.

The second environmental information corresponding to the same service is compared with the conditions.

In the case that the second environmental information does not satisfy the conditions, the virtual robots are allowed to be driven to execute the user operation in the view based on the simulation rule, which is determined as an action triggered by the event in the finite state machine.

In the case that the second environmental information satisfies the conditions, the virtual robots are prohibited from being driven to execute the user operation in the view based on the simulation rule, which is determined as an action triggered by the event in the finite state machine.

In other embodiments of the present disclosure, the process 104 includes the following processes.

In 1044, a user operation configured to trigger the service is determined in each loop to be null in the case that the service is idle.

In 1045, the virtual robots are driven, in response to the user operation, to wait in the view, which is determined as an action triggered by the event in the finite state machine.

In each tick loop, the type of the services is detected. In the case that the type of the service is idle, the user operation configured to trigger the service is set to null.

In this case, the virtual robots are driven to wait in a current view, and temporarily do not execute the valid user operation, and waiting is an action triggered by the event in the finite state machine according to the mechanism of the finite state machine.

In the embodiment, a plurality of virtual robots constructed by using the finite state machine are started. The virtual robots are configured to simulate, in a plurality of loops, the user to operate the application program. In each loop, the view in which the virtual robots are located in the application program is determined, and the view is determined as a state in the finite state machine. A user is simulated, in each loop, to select a service for the virtual robots in the view, which is determined as an event occurring in the state in the finite state machine. The virtual robots are driven, in each loop, to execute, in the view, a user operation configured to trigger a service, which is determined as an action triggered by the event in the finite state machine.

The embodiment constructs the virtual robots by using the finite state machine, which provides a framework for the virtual robots to run under a specification of the finite state machine, facilitates the integration of the framework into modules of different business scenarios, writes a logic of the business scenarios, and thus is strong in universality and expansibility.

For example, in the case that the virtual robots are connected to a whole system, and in the case that third-party tools such as a stress test tool and a cell test tool provide interfaces for the virtual robots, these interfaces are integrated into the framework for the virtual robots, so as to facilitate the virtual robots to hook the third-party tools, and meet business requirements such as stress test and cell test.

The framework of the virtual robots designed by using the finite state machine has high maintainability. Business personnel do not need to concern with the bottom framework of the finite state machine and the state and the action of the upper layer during development and maintenance, such that business codes can be split according to the state, that is, the business codes are basically all decoupled from each other, so as to realize high coupling and low cohesion, which greatly reduces the workload during development and maintenance and thus greatly reduces the cost. Moreover, the expansion and enrichment of the behavior of the virtual robots are facilitated, so as to simulate the operation of the user at a high degree of freedom, and improve the authenticity of the emulation of the user by the virtual robots.

The amount of information stored by the virtual robots is small and the pressure on storage is very small. Moreover, the virtual robots simulate a real user with infrequent actions, mainly occupy resources such as a processor in the case that a specific action is triggered, and have strong capacity expansibility, and horizontal capacity expansion can be done in the case of restart or disaster tolerance.

### Second Embodiment

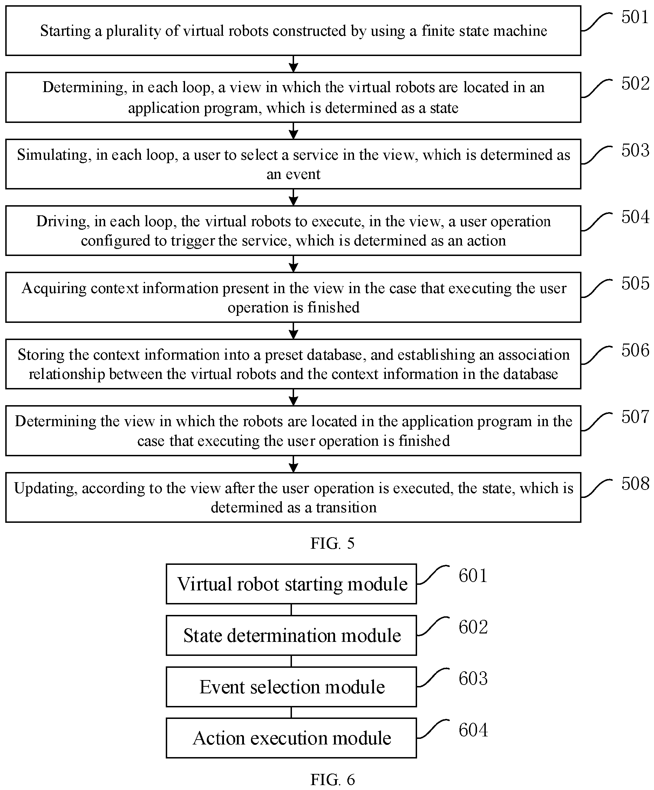

FIG. 5 is a flowchart of a method for controlling virtual robots according to the second embodiment of the present disclosure. Operations of storing the context information and transiting the states in the finite state machine are added to the embodiment based on the above embodiments. As shown in FIG. 5, the method includes the following processes.

In 501, a plurality of virtual robots constructed by using a finite state machine are started.

The virtual robots are configured to simulate, in a plurality of loops, a user to operate an application program. The finite state machine includes a plurality of states, a plurality of events occurring in the states, and actions triggered by the events.

In 502, a view in which the virtual robots are located in an application program is determined in each loop, which is determined as a state.

In 503, a user is simulated, in each loop, to select a service in the view, which is determined as an event.

In 504, the virtual robots are driven, in each loop, to execute, in the view, a user operation configured to trigger the service, which is determined as an action.

In 505, in the case that executing the user operation is finished, context information present in the view is acquired.

In 506, the context information is stored into a preset database, and an association relationship between the virtual robots and the context information is established in the database.

As shown in FIG. 2, in the case that the virtual robots finish executing the user operation, the context information is acquired, based on business requirements of business scenarios, from a plurality of views of the application program, and the context information is recorded in a form such as key/value.

The virtual robots (represented by identifiers such as ID) are used as indexes, and the association relationship between the virtual robots and the context information is established in the database, such that the corresponding context information is subsequently queried in the database with the virtual robots as conditions, thereby assisting in executing subsequent user operations.

Generally, in the case that the virtual robots are destroyed, at least part of the context information is released, thereby reducing the occupation of storage space in the database.

In 507, in the case that executing the user operation is finished, the view in which the virtual robots are located in the application program is determined.

In 508, the state in the finite state machine is updated according to the view upon executing the user operation, which is determined as a transition in the finite state machine.

In some cases, as shown in FIG. 2, the finite state machine includes the following concepts:
State;
Event;
Action; and
Transition representing the transition of a state, which refers to a change from one state to another.

In some cases, in the case that the user operation is executed by the virtual robots, a transition from one view to another view occurs in the application program. In this case, a new view in which the virtual robots are located in the application program is queried, the state in the finite state machine is updated based on the new view, and the state in this case is stored in the database. According to the mechanism of the finite state machine, this process is a transition in the finite state machine, which ensures the normal running of the finite state machine and thus the normal running of the virtual robots.

For example, as shown in FIG. 4, in the case that the virtual robots finish executing an action corresponding to check-out, a transition from a live-streaming room (state) to a home page (state) occurs.

In some cases, for example, in the case that the service is idle, the application program keeps a current view unchanged upon the virtual robots executing the user operation. In this case, the state in the finite state machine is maintained and not updated.

For example, as shown in FIG. 4, in the case that the virtual robots finish executing an action corresponding to idle, posting pop-up information, presenting a virtual item, or liking, the live-streaming room (state) is kept unchanged.

### Third Embodiment

FIG. 6 is a schematic structural diagram of an apparatus for controlling virtual robots according to the third embodiment of the present disclosure. As shown in FIG. 6, the apparatus includes:
a virtual robot starting module 601, configured to start a plurality of virtual robots constructed by using a finite state machine, wherein the virtual robots are configured to simulate, in a plurality of loops, a user to operate an application program, and the finite state machine includes a plurality of states, a plurality of events occurring at the plurality of states, and actions triggered by the plurality of events;
a state determination module 602, configured to determine, in each loop, a view in which the virtual robots are located in the application program, and determine the view as the state;
an event selection module 603, configured to simulate, in each loop, the user to select a service in the view, and determine the selected service as the event; and
an action execution module 604, configured to drive, in each loop, the virtual robots to execute, in the view, a user operation configured to trigger the service, and determine the user operation as the action.

In the embodiments of the present disclosure, the state determination module 602 includes:
a state reading module, configured to read, in a first loop, a state in the finite state machine stored for the virtual robots in the last loop from a preset database;
a state resumption module, configured to configure, in the case that the reading is successful, the state to the virtual robots, so as to resume the view in the application program; and
a default setting module, configured to determine, in the case that the reading is unsuccessful, that the virtual robots are located in a default view in the application program, and determine the default view as the state.

In the embodiments of the present disclosure, the event selection module 603 includes:
a first file loading module, configured to load, in each loop, a first file configured for the view;
a screening rule reading module, configured to read services provided by the view and a screening rule in the first file; and
a rule screening module, configured to simulate the user to select one of the services based on the screening rule, and determine the selected service as the event.

In the embodiments of the present disclosure, the rule screening module includes:
a probability reading module, configured to read a probability of selecting each of the services for the user from the screening rule; and
a probability selecting module, configured to select one of the services for the virtual robots based on the probability, which is determined as the event.

The services include idle, and the probability of the idle is greater than the probability of any service other than the idle.

In the embodiments of the present disclosure, the event selection module 603 is further configured to:
detect an error in the view, wherein the services provided by the view include at least idle; and
simulate, in response to the error, the user to select the idle in the view, and determine the idle as the event.

In the embodiments of the present disclosure, the action execution module 604 includes:
a second file loading module, configured to load, in each loop, a second file configured for the view;
a simulation rule reading module, configured to read, in the second file, a simulation rule configured for the services; and
a simulation rule execution module, configured to drive the virtual robots to execute a user operation in the view based on the simulation rule, which is determined as the action.

In the embodiments of the present disclosure, the simulation rule execution module is configured to:
read interface specifications for executing the user operation in the simulation rule;
generate, based on the interface specifications, a user request configured to represent executing the user operation in the view; and
drive the virtual robots to send the user request to a server, which is determined as the action.

In the embodiments of the present disclosure, the simulation rule execution module is configured to:
acquire, from a preset database, context information recorded by the virtual robots in a process of simulating the user to operate the application program;
read, from the context information, first environmental information on which the service has dependency based on the simulation rule;
determine, based on the simulation rule, a component on which the service has dependency;
call the component to generate target information applicable to the first environmental information; and
drive the virtual robots to post the target information in the view, which is determined as the action.

In the embodiments of the present disclosure, the simulation rule execution module is configured to:
acquire, from a preset database, context information recorded by the virtual robots in a process of simulating the user to operate the application program;
read, from the context information, second environmental information which limits the service based on the simulation rule;
determine conditions which limits the service based on the simulation rule;
in the case that the second environmental information does not satisfy the conditions, allow the virtual robots to be driven to execute the user operation in the view based on the simulation rule, which is determined as the action; and
in the case that the second environmental information satisfies the conditions, prohibit the virtual robots from being driven to execute the user operation in the view based on the simulation rule, which is determined as the action.

In other embodiments of the present disclosure, the action execution module 604 includes:
a null-operation determination module, configured to determine, in each loop, that a user operation configured to trigger the service is null in the case that the service is idle; and
a waiting module, configured to drive, in response to the user operation, the virtual robots to wait in the view, which is determined as the action.

In the embodiments of the present disclosure, the action execution module further includes:
a context information acquisition module, configured to acquire context information present in the view in the case that executing the user operation is finished; and
a context information storage module, configured to store the context information into a preset database, and establish an association relationship between the virtual robots and the context information in the database.

In the embodiments of the present disclosure, the finite state machine further includes a transition representing a transition of the state, and the apparatus further includes:
a new view determination module, configured to determine the view in which the virtual robots are located in the application program in the case that executing the user operation is finished; and
a state transition module, configured to update, based on the view upon executing the user operation, the state in the finite state machine, which is determined as the transition.

The apparatus for controlling the virtual robots provided by the embodiments of the present disclosure can perform the method for controlling the virtual robots provided by any embodiment of the present disclosure, and has corresponding functional modules and effects of executing the method for controlling the virtual robots.

### Fourth Embodiment

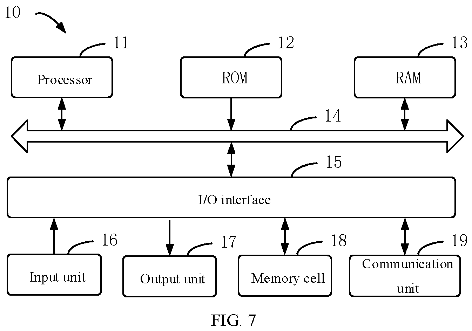

FIG. 7 shows a schematic structural diagram of a device for controlling virtual robots 10 that can be used for implementing the embodiments of the present disclosure.

As shown in FIG. 7, the device for controlling the virtual robots 10 includes at least one processor 11, and a memory, such as a read-only memory (ROM) 12 and a random access memory (RAM) 13, in communication connection to the at least one processor 11. The memory stores one or more computer programs run by the at least one processor, and the processor 11 is caused to perform various suitable actions and processes according to the one or more computer programs stored in the ROM 12 or the one or more computer programs loaded from a memory cell 18 into the RAM 13. In the RAM 13, various programs and data necessary for the operation of the device for controlling the virtual robots 10 are also stored. The processor 11, the ROM 12, and the RAM 13 are connected to each other via a bus 14. An input/output (I/O) interface 15 is also connected to the bus 14.

A plurality of components in the device for controlling the virtual robots 10 are connected to the I/O interface 15, including: an input unit 16 such as a keyboard or a mouse; an output unit 17 such as various types of displays or speakers; a memory cell 18 such as a magnetic disk or an optical disk; and a communication unit 19 such as a network card, a modem, or a wireless communication transceiver. The communication unit 19 allows the device for controlling the virtual robots 10 to exchange information/data with other devices through a computer network such as the internet and/or various telecommunication networks.

The processor 11 may be various general-purpose and/or dedicated processing components having processing and computing capabilities. Some examples of the processor 11 include a central processing unit (CPU), a graphics processing unit (GPU), various dedicated artificial intelligence (AI) computing chips, various processors running machine learning model algorithms, a digital signal processor (DSP), any suitable processor, controller or microcontroller, and the like. The processor 11 performs a plurality of the methods and processes described above, such as the method for controlling the virtual robot.

In some embodiments, the method for controlling the virtual robots is implemented as one or more computer programs that are tangibly embodied in a computer-readable storage medium, such as the memory cell 18. In some embodiments, a portion or all of the computer programs are loaded and/or installed onto the device for controlling the virtual robots 10 via the ROM 12 and/or the communication unit 19. The processor 11, when executing the computer programs loaded into the RAM 13, causes the processor to perform one or more processes of the above method for controlling the virtual robots. Alternatively, in other embodiments, the processor 11 is configured to perform the method for controlling the virtual robots by any other suitable manners (e.g., by means of firmware).

### Fifth Embodiment

The embodiments of the present disclosure further provide a computer program product including one or more computer programs. The one or more computer programs, when run by a processor, cause the processor to perform the method for controlling the virtual robots according to any one of the embodiments of the present disclosure.

In a process of implementing the computer program product, computer program codes used for executing the operations of the present disclosure are written in any combination of one or more programming languages, including object-oriented programming languages such as Java, Smalltalk, and C++, and conventional procedural programming languages such as the "C" programming language or similar programming languages. The program codes are executed entirely on the user's computer, partly on the user's computer, as a stand-alone software package, partly on the user's computer and partly on a remote computer, or entirely on a remote computer or a server. In cases involving the remote computer, the remote computer is connected to the user's computer through any type of network, including a local area network (LAN) or a wide area network (WAN), or is connected to an external computer (for example, through the internet by using an internet service provider).

The embodiments of the present disclosure further provide a storage medium containing one or more computer-executable instructions. The one or more computer-executable instructions, when executed by the computer processor, cause the computer processor to perform the method for controlling the virtual robots provided by the embodiments of the present disclosure. The storage medium may be a non-transitory storage medium.

Various forms of the flows shown above are used, with steps re-ordered, added, or deleted. For example, a plurality of steps described in the present disclosure are executed in parallel, sequentially, or in different orders, and are not limited herein as long as the desired result of the technical solutions of the present disclosure can be realized.

## Claims

1. A method for controlling virtual robots, comprising:
starting a plurality of virtual robots constructed by using a finite state machine, wherein the virtual robots are configured to simulate, in a plurality of loops, a user operating an application program, and the finite state machine comprises a plurality of states, a plurality of events occurring at the plurality of states, and actions triggered by the plurality of events;
determining, in each loop, a view in which the virtual robots are located in the application program, and determining the view as the state;
simulating, in each loop, the user to select a service in the view, and determining the selected service as the event; and
driving, in each loop, the virtual robots to execute, in the view, a user operation configured to trigger the service, and determining the user operation as the action.

2. The method according to claim 1, wherein determining, in each loop, the view in which the virtual robots are located in the application program, and determining the view as the state comprises:
reading, in a first loop, a state in the finite state machine stored for the virtual robots in a last loop from a preset database;
configuring, in a case that reading is successful, the read state to the virtual robots, so as to resume the view in the application program; and
determining, in a case that the reading is unsuccessful, that the virtual robots are located in a default view in the application program, and determining the default view as the state.

3. The method according to claim 1, wherein simulating, in each loop, the user to select the service in the view, and determining the selected service as the event comprises:
loading, in each loop, a first file configured for the view;
reading services provided by the view and a screening rule in the first file; and
simulating the user to select one of the services based on the screening rule, and determining the selected service as the event.

4. The method according to claim 3, wherein simulating the user to select one of the services based on the screening rule, and determining the selected service as the event comprises:
reading a probability of selecting each of the services for the user from the screening rule; and
selecting one of the services for the virtual robots based on the probability, and determining the selected service as the event;
wherein the services comprise idle, and the probability of the idle is greater than the probability of any service other than the idle.

5. The method according to claim 3, wherein simulating, in each loop, the user to select the service in the view, and determining the selected service as the event further comprises:
detecting an error in the view, wherein the services provided by the view comprise idle; and
simulating, in response to the error, the user to select the idle in the view, and determining the idle as the event.

6. The method according to claim 1, wherein driving, in each loop, the virtual robots to execute, in the view, the user operation configured to trigger the service, and determining the user operation as the action comprises:
loading, in each loop, a second file configured for the view;
reading a simulation rule configured for the service in the second file; and
driving the virtual robots to execute the user operation in the view based on the simulation rule, and determining the user operation as the action.

7. The method according to claim 6, wherein driving the virtual robots to execute the user operation in the view based on the simulation rule, and determining the user operation as the action comprises:
reading interface specifications for executing the user operation in the simulation rule;
generating, based on the interface specifications, a user request configured to represent executing the user operation in the view; and
driving the virtual robots to send the user request to a server, which is determined as the action.

8. The method according to claim 6, wherein driving the virtual robots to execute the user operation in the view based on the simulation rule, and determining the user operation as the action comprises:
acquiring, from a preset database, context information recorded by the virtual robots in a process of simulating the user to operate the application program;
reading, from the context information, first environmental information on which the service has dependency based on the simulation rule;
determining, based on the simulation rule, a component on which the service has dependency;
calling the component to generate target information applicable to the first environmental information; and
driving the virtual robots to post the target information in the view, which is determined as the action.

9. The method according to claim 6, wherein driving the virtual robots to execute the user operation in the view based on the simulation rule, and determining the user operation as the action comprises:
acquiring, from a preset database, context information recorded by the virtual robots in a process of simulating the user to operate the application program;
reading, from the context information, second environmental information which limits the service based on the simulation rule;
determining conditions which limit the service based on the simulation rule;
in a case that the second environmental information does not satisfy the conditions, allowing the virtual robots to be driven to execute the user operation in the view based on the simulation rule, which is determined as the action; and
in a case that the second environmental information satisfies the conditions, prohibiting the virtual robots from being driven to execute the user operation in the view based on the simulation rule, which is determined as the action.

10. The method according to claim 1, wherein driving, in each loop, the virtual robots to execute, in the view, the user operation configured to trigger the service, and determining the user operation as the action comprises:
determining, in each loop, that a user operation configured to trigger the service is null in a case that the service is idle; and
driving, in response to the user operation, the virtual robots to wait in the view, which is determined as the action.

11. The method according to any one of claims 1 to 10, further comprising:
acquiring context information present in the view in a case that executing the user operation is finished; and
storing the context information into a preset database, and establishing an association relationship between the virtual robots and the context information in the database.

12. The method according to any one of claims 1 to 10, wherein the finite state machine further comprises a transition representing a transition of the state, and the method further comprises:
determining the view in which the virtual robots are located in the application program in a case that executing the user operation is finished; and
updating, based on the view upon executing the user operation, the state, which is determined as the transition.

13. An apparatus for controlling virtual robots, comprising:
a virtual robot starting module, configured to start a plurality of virtual robots constructed by using a finite state machine, wherein the virtual robots are configured to simulate, in a plurality of loops, a user to operate an application program, and the finite state machine comprises a plurality of states, a plurality of events occurring at the plurality of states, and actions triggered by the plurality of events;
a state determination module, configured to determine, in each loop, a view in which the virtual robots are located in the application program, and determine the view as the state;
an event selection module, configured to simulate, in each loop, the user to select a service in the view, and determine the selected service as the event; and
an action execution module, configured to drive, in each loop, the virtual robots to execute, in the view, a user operation configured to trigger the service, and determine the user operation as the action.

14. A device for controlling virtual robots, comprising:
at least one processor; and
a memory in communication connection to the at least one processor, wherein
the memory stores one or more computer programs run by the at least one processor, and the one or more computer programs, when run by the at least one processor, cause the at least one processor to perform the method for controlling the virtual robots as defined in any one of claims 1 to 12.

15. A computer-readable storage medium, storing one or more computer programs, wherein the one or more computer programs, when run by a processor, cause the processor to perform the method for controlling the virtual robots as defined in any one of claims 1 to 12.

16. A computer program product, comprising one or more computer programs, wherein the one or more computer programs, when run by a processor, cause the processor to perform the method for controlling the virtual robots as defined in any one of claims 1 to 12.
